# EUROPEAN PATENT SPECIFICATION

(11) **EP 2 355 498 B1**
(45) Date of publication and mention of the grant of the patent: **06.09.2017**
(21) Application number: 10153220.8
(22) Date of filing: 10.02.2010
(51) Int. Cl.: H04N 5/782

(54) **Receiving external recording commands at a television receiver**
Empfangen von externen Aufzeichnungsbefehlen in einem Fernsehempfänger
Réception de commandes d'enregistrement externe dans un récepteur de télévision

(43) Date of publication of application: 10.08.2011
(73) Proprietor: EchoStar Technologies L.L.C., Englewood, CO 80112 (US)
(72) Inventor: de Jong, Menno, 7543 GA, Enschede (NL)
(74) Representative: Beck Greener

(56) References cited:
- WO-A1-2005/029859
- WO-A1-2009/030775
- US-A1- 2006 174 277

## Description

The present invention relates to a method for recording programming based on external recording commands and to a digital video recorder.

Digital video recorders (DVRs) and other recording devices allow users to store television programs, movies and other content for subsequent viewing. Typically, a user will select programming for recording from a user interface menu, such as a grid based electronic programming guide or select currently viewed programming for recording. Responsive to user input, the DVR sets a recording timer to record later broadcasted programming. However, it can be time consuming for a user to set recording timers for every program they desire to view. For example, a user may scroll through hundreds of channels to locate programming that they desire to view. Furthermore, a user may desire to record and/or view programming which they were either unaware of when viewing the electronic programming guide or unable to locate in the electronic programming guide in order to set a recording timer. Thus, the user may miss out on recording/viewing such programming because they did not set a corresponding recording timer.

Distribution networks exist to transmit record commands to a DVR from an external source, such as a service provider. For example, a service provider can automatically transmit a recording command to a DVR to record instructional material broadcast at a specified time and channel. However, such content is not likely related to content that the user typically desires to watch (e.g., non-instructional content) and the user does not have input into what kind of instructional material is recorded by the DVR. Thus, such recording commands do not suffice to automatically record non-instructional content which a user would desire to watch, but may otherwise be unwilling or unable to manually set recording timers to record such content.

WO2009/030775A1 describes a method for programming video recorders in which a piece of video content to be recorded is selected, the selection being made by a user using an electronic program guide presented by a server. An indication of said video content is included in a theme grouping one or more pieces of content on a same subject. Users with a subscription to the theme are selected, and the method automatically transmits programming instructions to the video recorders of users with a subscription to said theme.

US-A-2006/0174277 describes networking together multiple personal video recorders in order to share information. The currently viewed content by a user is shared with other users in a manner so that a user may obtain recommendations for suitable content.

WO2005/029859 describes a method for recording television programming, the method comprising: presenting profile information to a user, the profile information including a plurality of profiles available for selection; receiving a user selection, of at least one of the profiles, at a server; receiving at least one recording command, at a digital video recorder, from the server, the recording command associated with a user selected profile; receiving a program, specified by the recording command, at the digital video recorder, responsive to the recording command; and coordinating storage of the program onto a storage medium associated with the digital video recorder, responsive to the recording command.

The present invention seeks to provide a digital video recorder and a method for recording television programming for subsequent viewing. The scope of the invention is defined by its independent claims. According to a first aspect of the present invention a method as defined above is characterised in that the profiles available for selection are associated with other users such that a user can follow a specific user; in that each specific user, who may or may not be identified, has authorised the server to allow unfettered access to its profile to make the profile available to be followed; in that the available profiles for selection are listed at the server; in that the user selection specifies a plurality of profiles and the operation of receiving the recording command further comprises: receiving, at the digital video recorder, a first recording command, associated with a first selected profile; receiving, at the digital video recorder, a second recording command, associated with a second selected profile; identifying, at the digital video recorder, a recording conflict between the first recording command and the second recording command; and determining whether the first recording command has priority over the second recording command.

Preferably, the method further includes receiving user input, at the digital video recorder, specifying a priority of the first recording command.

In embodiments of the invention, a DVR receives recording commands from an external server. The recording commands are associated with the profile which is selected by a user, and the user may record programming which will also be recorded by another user, such as a friend. The DVR receives and processes the recording commands as appropriate to record programming for a user. Thus, the user's DVR records programming without the user setting individual recording timers for each piece of content recorded by the DVR.

Preferably, the operation of presenting the profile information to a user further includes: transmitting the profile information from the server to the digital video recorder; and outputting the profile information from the digital video recorder to an associated presentation device.

Preferably, the operation of the plurality of profiles includes a plurality of profile types, each associated with a particular theme of programming.

Preferably, the method further includes the operations of: outputting a selection menu, from the digital video recorder to an associated presentation device, the selection menu presenting information associated with the recording command; and receiving user input, at the digital video recorder, confirming execution of the recording command; wherein the coordinating storage of the program onto the storage medium is performed if the user input confirms execution of the recording command.

The present invention also extends to a digital video recorder comprising: a communication interface operable to receive television programming from a television distribution system and to receive profile information, associated with a plurality of profiles, from a server; a storage medium; and control logic operable to select at least one of the profiles; the communication interface operable to transmit information specifying the selected profile to the server and receive at least one recording command associated with the selected profile from the server; the control logic operable to command the communication interface to receive a program specified by the recording command and coordinate storage of the program onto the storage medium; characterised in that the profiles available for selection are associated with other users such that a user can follow a specific user; in that each specific user, who may or may not be identified, has authorised the server to allow unfettered access to its profile to make the profile available to be followed; in that the available profiles for selection are listed at the server; in that the control logic is operable to: receive, at the digital video recorder, a first recording command, associated with a first selected profile; receive, at the digital video recorder, a second recording command, associated with a second selected profile; identify, at the digital video recorder, a recording conflict between the first recording command and the second recording command; and determine whether the first recording command has priority over the second recording command.

Preferably, the control logic is operable to output the profile information to a presentation device and the digital video recorder further comprises an input interface operable to receive user input selecting at least one of the profiles, the communication interface operable to transmit information specifying the selected profile to the server and to receive at least one recording command, associated with the selected profile, from the server.

Preferably, the plurality of profiles comprise a plurality of profile types, each associated with a particular theme of programming.

Preferably, the communication interface receives the recording command over a data communication network separate from the television distribution system.

Preferably, the control logic is operable to output a selection menu, to an associated presentation device, the selection menu presenting information associated with the recording command; the input interface is operable to receive user input confirming execution of the recording command; and the control logic is operable to coordinate storage of the program if the user input confirms execution of the recording command.

Preferably, the control logic is operable to process viewing characteristics of the user and automatically select one of the profiles based on the viewing characteristics and transmit the automatically selected profile to the server.

Embodiments of the invention will hereinafter be described by way of example with reference to the accompany drawings, in which:
FIG. 1 illustrates an embodiment of a communication system.
FIG. 2 illustrates an embodiment of a DVR of FIG. 1.
FIG. 3 illustrates an embodiment of a process for recording television programming.

The same number represents the same element or same type of element in all drawings.

Described herein are techniques for sharing recording commands between multiple DVRs. A DVR receives recording commands from an external server. For example, an external server may aggregate recording commands from multiple DVRs and then distribute recording commands to other DVRs according to various criteria, causing multiple DVRs to record the same programming.

A user is presented with various profiles for selection. The user may view the profiles through the DVR or via another device, such as a computer, mobile communication device or the like. The user may then select one or more profiles and the server will provide the user's DVR with recording commands or content recommendations associated with the selected profile. For example, profiles may be associated with particular themes or genres of programming, such as sports, action movies, cartoons or the like. The profiles are associated with other users, such as friends, celebrities, critics, power users or the like. Thus, a user can "follow" other users and record the same programming that other users record.

The DVR device receives and processes the recording commands to recommend programming to a user for recording and/or viewing. The DVR receives the recording commands and present the recording commands to the user. The user may then select the recording commands they desire to activate and the DVR responsively records the programming specified by the activated recording commands. If the program is currently being aired, then the DVR may output a pop-up, reminding the user that the recommended programming is currently available for viewing. The DVR receives the recording commands and automatically records the programming specified by the recording commands. Thus, the DVR can record content automatically without a user setting individual recording timers for each program that they desire to record.

The techniques described herein are illustrated in the context of a television receiving system (e.g., satellite or cable television). More particularly, the techniques are illustrated herein in the operation of a DVR that is operable to record audio/video content from a television distribution system. However, it is to be appreciated that the techniques described herein may be applied to any type of recording device that records any type of content, including video content, audio content, audio/video content or the like. Furthermore, the techniques described herein may be applied to store/record content distributed in any appropriate manner over any type of distribution platform. Thus, it is to be appreciated that the techniques described herein are not limited solely to DVRs or receiving devices in a television distribution network.

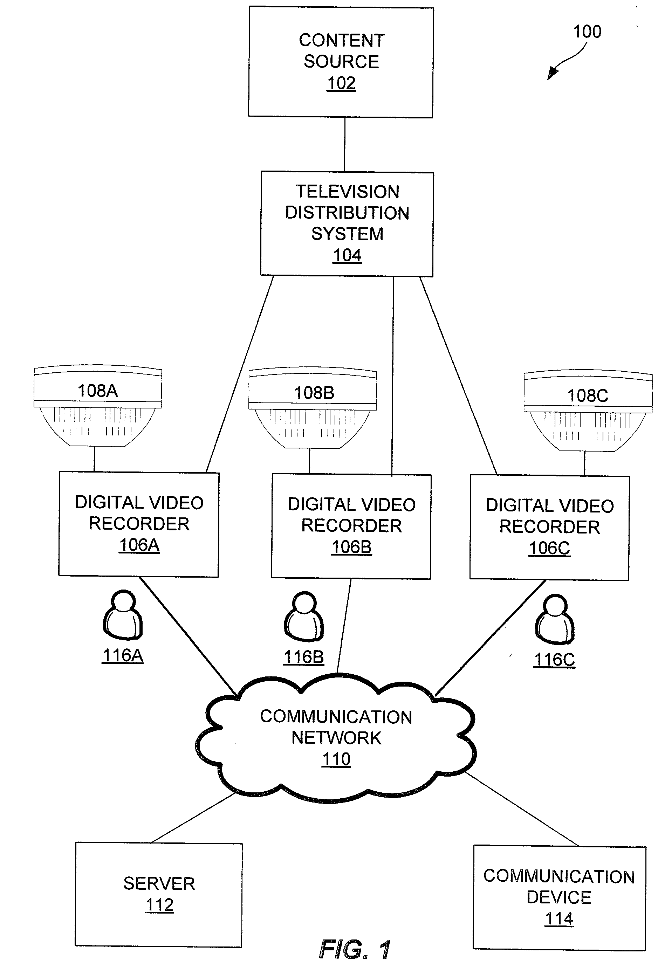

FIG. 1 illustrates an embodiment of a communication system 100. The communication system 100 includes a content source 102, a television distribution system 104, digital video recorders 106A, 106B and 106C, presentation devices 108A, 108B and 108C, a communication network 110, a server 112 and a communication device 114. Each of these components is discussed in greater detail below. The communication system 100 may include other components, elements or devices not illustrated for the sake of brevity.

The content source 102 is operable for receiving and/or generating content for communication via the television distribution system 104 to one or more television receivers, e.g., DVRs 106A-106C. The content to be received, processed, outputted and/or communicated may come in any of various forms including, but not limited to, audio, video, data, information, or otherwise. Exemplary content sources 102 include over-the-air (OTA) terrestrial transmission facilities, cable television distribution head-ends, satellite television uplink centers, broadband or internet servers and the like.

The television distribution system 104 is operable to transmit content from the content source 102 to the DVRs 106A-106C and/or other types of television and television receiving devices (e.g., cable, satellite and/or IPTV set-top boxes). The television distribution system 104 may comprise any type of wired (e.g., cable and fiber) and/or wireless (e.g., cellular, satellite, microwave, and other types of radio frequency) communication medium and any desired network topology (or topologies when multiple mediums are utilized). Exemplary television distribution systems 104 include terrestrial, cable, satellite and internet protocol television (IPTV) distribution systems. In at least one embodiment, the television distribution system 104 broadcasts or multicasts content to a plurality of television receivers, e.g., the DVRs 106A-106C. The television distribution system 104 may also distribute content to a specific addressable television receiver, e.g., DVRs 106A-106C, such as video-on-demand and the like. In at least one embodiment, the content source 102 may be embodied as a transmission facility of the television distribution system 104.

The DVRs 106A-106C are operable to receive content from the television distribution system 104 and store the received content for subsequent presentation to a user 116A-116C. The DVRs 106A-106C are operable to output the received and/or stored content for presentation by the presentation devices 108A-108C, respectively. In at least one embodiment, the presentation devices 108A-108C are display devices (e.g., a television) configured to display content to a user 116A-116C. The DVRs 106A-106C may receive an audio/video stream in any format (e.g., analog or digital format), and store and output the audio/video stream for presentation by the presentation devices 108A-108C. In at least one embodiment, the DVRs 106A-106C may be integrated with a television receiver, such as a satellite, cable, over-the-air, broadband or other type of television receiver that receives and demodulates television signals that are outputted for display on a display device (e.g., a television). As used herein, a television receiver or DVR may also be referred to as a set-top box, which is a television receiver that is located externally with respect to a display device. The DVRs 106A-106C may be further configured to output menus and other information that allow a user to control the output of audio/video content by the DVRs 106A-106C, view electronic programming guides (EPGs), set recording timers and the like. In some embodiments, the DVRs 106A-106C and the presentation devices 108A-C may be integrated as a device combining the functionality of a display device and television receiver/DVR or the like.

Responsive to particular recording timers, the DVRs 106A-106C coordinate the reception of video signals associated with a television program through a television receiving resource (e.g., a television tuner) and storage of the video signal onto a storage medium (e.g., a hard drive or Flash memory). The DVRs 106A-106C may include any number of television receiving resources utilized for receiving television programs. Each DVR 106A-106C minimally includes at least one television receiving resource to receive and record video signals associated with a television program. The DVRs 106A-106C may include multiple television receiving resources to record multiple television programs simultaneously. For example, the DVRs 106A-106C may include two or more tuners that allow recording and/or viewing of multiple programs through each DVR 106A-106C simultaneously. In at least one embodiment, the DVRs 106A-106C may include multiple types of television receiving resources, such as an over-the-air (OTA) tuner and a satellite and/or cable television tuner that may be utilized to receive and/or record programs from multiple sources.

The communication network 110 is operable to communicatively couple the server 112 with the DVRs 106A-106C and communicatively couple the communication device 114 with the server 112 and/or the DVRs 106A-106C. The communication network 110 may utilize any desired combination of wired (e.g., cable and fiber) and/or wireless (e.g., cellular, wireless, satellite, microwave, and radio frequency) communication mediums and any desired network topology (or topologies when multiple mediums are utilized). Exemplary communication networks include television distribution networks, wireless communication networks, public switched telephone networks (PSTN), and local area networks (LAN) or wide area networks (WAN) providing data communication services. In at least one embodiment, the television distribution system 104 and the communication network 110 may be combined into a single physical communication network and/or a single logical communication network, depending on desired design criteria.

The communication device 114 is operable to connect to the server 112 and/or the DVR 106A-106C via the communication network 110 to receive content and present the content to a user (not shown in FIG. 1). The communication device 114 may comprise any type of device that provides communication services to a user. For example, the communication device 114 may be a mobile telephone that provides voice and data communication services to the user. In other embodiments, the communication device 114 may comprise a mobile device with a display screen that provides data communication services to the user, such as email, video, internet browsing and the like. In at least one embodiment, the communication device 114 may be a laptop or other type of computer. A communication device 114 may be utilized by a user 116A-116C to interface with the server 112 as described in further detail below.

The server 112 is communicatively coupled to the DVRs 106A-106C and/or the communication device 114 and operates as a central repository for viewing data and/or recording information. More particularly, the server 112 is operable to aggregate viewing history and/or recording information from one or more of the DVRs 106A-106C. The viewing history and/or recording information from a particular DVR 106A-106C or a particular user 116A-116C of one of the DVRs 106A-106C may be associated with one or more profiles stored by the server 112.

Based upon the profile information, the server 112 is operable to identify recording commands or content recommendations for transfer to one or more of the DVRs 106A-106C and initiate transfer of the identified content recommendations and/or commands to the DVRs 106A-106C. The DVRs 106A-106C may then execute the recording commands to record programs specified therein and/or make recommendations of content for viewing/recording by a user 116A-116C of the DVRs 106A-106C.

In at least one embodiment, the server 112 processes a user's 116A-116C viewing history and/or programs that the user 116A-116C has recorded and makes recommendations of content that the server 112 expects the user 116A-116C to desire to watch. For example, if the user 116A of the DVR 106A typically watches action movies, then the server 112 may identify other action movies that the user 116A has not yet recorded/viewed and recommend the identified movies for viewing by the user 116A. More particularly, the server 112 may transmit data to the DVR 106A identifying recommended movies for viewing. In at least one embodiment, the DVR 106A may receive the information from the server 112 and provide a menu/prompt identifying the recommended movies. For example, if a program is currently being broadcast or will be broadcast in the near future (e.g., 15 minutes), then the DVR 106A may provide a pop-up recommending the program for possible viewing by the user 116A.

The DVR 106A may also present a menu of subsequently broadcasted programming that the user may select for recording/viewing. For example, the DVR 106A may present recommendations of action movies that the user 116A may desire to view. The user 116A may then provide appropriate input, such as checking a box in the selection menu, to automatically set a recording timer for a desired program.

In at least one embodiment, the DVR 106A may automatically record programming based on information provided by the server 112. For example, the server 112 may transmit one or more recording commands to the DVR 106A and the DVR 106A may automatically record the content specified by the recording commands. Thus, the DVR 106A records content for viewing by the user 116A without the user input setting recording timers for each program to be recorded.

In at least one embodiment, the server 112 outputs information regarding various profiles for presentation to a user. The profile information may be utilized by a receiving device to generate an appropriate selection menu for presentation to a user. In at least one embodiment, the server 112 transmits the profile information to one of the DVRs 106A-106C for generation of a selection menu for output by the presentation devices 108A-108C. In another embodiment, the server 112 may transmit the profile information to the communication device 114 for generation and output of a selection menu to a user.

More particularly, a user 116A-116C may select one or more profiles included in the selection menu to "follow" the profile. In other words a user 116A-116C may desire to watch/record the programming associated with the selected profile. Thus, a user 116A-116C may provide input selecting a particular profile and the server 112 may responsively provide information, such as recommendations or recording commands, for processing by a DVR 106A-106C associated with the user 116A-116C.

For example, a user 116A may have similar tastes in content as a friend (e.g., user 116C). Thus, the user 116A may desire to record the same content as user 116C. The server 112 may collect information regarding recording timers input to the DVR 106C and transmit the recording commands to the DVR 106A for processing. Thus, in at least one embodiment, the DVR 106A receives the recording commands and responsively sets recording timers corresponding to the recording commands. The DVR 106A may then automatically record the programs specified by the recording commands without additional input by the user 116A. As the user 116C sets additional recording timers on the DVR 106C, the server 112 responsively transmits new recording commands to the DVR 106A for execution.

In another embodiment, the DVR 106A may receive recording commands and may provide a selection menu or the like recommending the programs for viewing/recording by the user 116A. The user 116A may then provide input confirming or denying execution of the recording commands by the DVR 106A. If the user 116A confirms execution of the recording command, then the DVR 106A operates to record the program(s) specified by the recording command.

In at least one embodiment, the user 116A may be able to view what programming another user is currently watching. For example, the user 116A may access the profile or one of the users 116B or 116C and the profile may present what programming the corresponding user is currently watching. Responsive to viewing the profile, the user 116A may access a link corresponding with the program currently being viewed by the user 116B or 116C, allowing the user 116A to switch the DVR 106A to the selected programming.

In at least one embodiment, a user 116A may "follow" multiple profiles. For example, the user 116A may select profiles associated with both the users 116B and 116C. Thus, as new recording timers are set on the DVRs 106B and 106C, the server 112 identifies the new recording timers and transmits new recording commands to the DVR 106A for execution.

Occasionally, recording conflicts may occur between various recording timers set by the user 116A on the DVR 106A. More particularly, multiple recording timers set on the DVR 106A may require the same receiving resource (e.g., tuner) at the same time. Thus, the DVR 106A may resolve the recording conflict based on various appropriate rules, such as the recording timer having the highest priority. For example, a recording timer set by the user 116A on the DVR 106A may have a default higher priority than a recording command received from the server 112.

In at least one embodiment, recording commands received from the server 112 that are associated with the profiles of the users 116B and 116C may conflict. Thus, the DVR 106A may determine a highest priority of the corresponding recording commands. For example, when selecting to follow the profiles of the users 116B and 116C, a user 116A may indicate a priority for recording commands associated with each profile. Thus, if the recording commands associated with the profile of user 116B have a higher priority than the recording commands associated with the profile of user 116C, then the DVR 106A will execute the recording command associated with the profile of user 116B in the event of a conflict.

The server 116A may present profiles to a user 116A-116C for selection in any appropriate manner. In at least one embodiment, a user 116A may select profiles of their friends 116B-116C. For example, the user 116A may input usernames, email addresses or other identifiers to locate profiles of their friends for selection. In some embodiments, the users 116B and 116C may authorize the user 116A to access their profile prior to the server 112 allowing the user 116A to "follow" the profiles of the users 116B and 116C. For example, the user 116A may provide input to the server 112 identifying their friends and the server 112 may transmit a message to the DVRs 106B-106C (or other appropriate communication device) requesting authorization to allow the user 116A access to the corresponding profiles of the users 116B-116C.

In at least one embodiment, a user 116A-116C may authorize the server 112 to allow unfettered access to their profile by other users 116A-116C. For example, a celebrity or critic may desire to have their profile available for following by other users 116A-116C. Thus, a user 116A may access a directory of available profiles and select one or more profiles to "follow". For example, the user 116A may view a particular profile through the server 112 and see that the profile is associated with recording content that the user 116A typically likes to watch. Thus, the user 116A may select to "follow" the profile and the server 112 may subsequently transmit new recording commands associated with the profile to the DVR 106A as appropriate.

In some embodiments, profiles may be listed at the server 112 anonymously, such that a user 116A-116C may follow a profile without knowing the identity of the user associated with the profile. Thus, a user 116A viewing the profile may know what kind of content is typically recorded by the profile and "follow" the profile based on the recording characteristics of the user behind the profile. However, the identity of the profile is not available to the user 116A when making the selection to "follow" the profile.

In at least one embodiment, a user 116A-116C may "follow" generic profiles that are maintained by the server 112 based on an aggregation of the recording characteristics of multiple users 116A-116C. For example, a user 116A may be able to select and "follow" profiles types which are associated with particular genres of content, such as action movies, sports, children's programming and the like. In at least one embodiment, these profiles types are not associated with a particular user. For example, a content provider may generate generic profile types associated with particular types, themes or genres of content that are available for selection by users 116A-116C. As described below, profile types may also be constructed by the server 112 based on the aggregation of recording information regarding multiple users 116A-116C.

In at least one embodiment, the server 112 aggregates recording information from multiple users 116A-116C and identifies similarities in content recorded by multiple users 116A-116C. For example, if each of users 116A-116C record the same three programs, then the server 112 may construct a generic profile that other users may follow. For example, selection of the generic profile may result in the server 112 transmitting recording commands for the three programs to a DVR device associated with the user selecting to follow the profile.

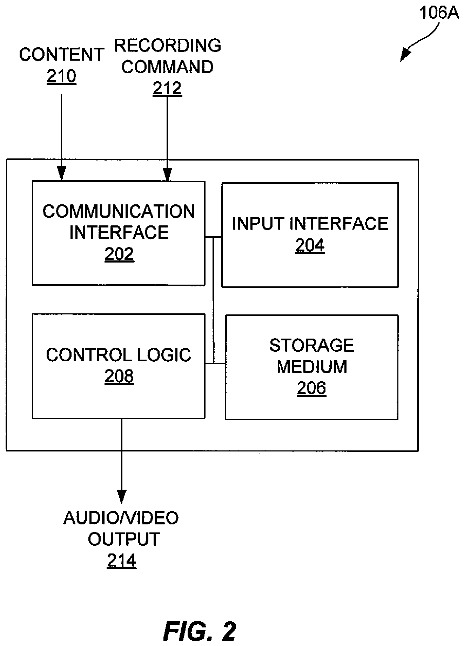

FIG. 2 illustrates an embodiment of a DVR 106A of FIG. 1. The DVR 106A of FIG. 2 will be discussed in reference to the communication system 100 of FIG. 1. The DVR 106A includes a communication interface 202, an input interface 204, a storage medium 206 and control logic 208. Each of these components is discussed in greater detail below. The DVR 106A may include other components, elements or devices not illustrated for the sake of brevity.

The communication interface 202 is operable to receive content 210 from the television distribution system 104. More particularly, in at least one embodiment, the communication interface 202 receives and tunes a television signal including television programming. The communication interface 202 may receive an over-the-air (OTA) broadcast, a direct broadcast satellite signal, a cable television signal or an IPTV signal and tune the content 210 to extract the selected television programming. In at least one embodiment, the communication interface 202 may comprise multiple tuners, utilized by the DVR 306A to output and/or record multiple television programs simultaneously.

The communication interface 202 is further operable to receive a recording command 212 from the server 112 (see FIG. 1) via the communication network 110. In at least one embodiment, the communication interface 202 may include a network interface, such as a WiFi transceiver or Ethernet interface for communication with the communication network 110. The communication interface 202 may receive the content 210 and the recording command 212 via the same or different communication networks depending on desired design criteria. Furthermore, the communication interface 202 may include any number of discrete communication interfaces to exchange data with external sources, such as the content source 102 and the server 112. For example, the communication interface 202 may include a satellite television tuner to receive content from a satellite television distribution network and may include a network interface to receive content from a discrete data communication network, such as a local area network (LAN) or wide area network (WAN).

The input interface 204 is operable to wirelessly receive data from a remote control or other input device, such as a keyboard, mouse, mobile communication device or the like (not shown in FIG. 2). The input interface 204 may communicate with a remote control utilizing any type of IR and/or RF communication link. In at least one embodiment, the input interface 204 receives a key code from a remote control (not shown in the figures) and responsively provides the key code to the control logic 208 for processing. The data received from the remote control may be utilized by the control logic 208 to control the output of content by the DVR 106A.

The storage medium 206 is operable to persistently store video signals recorded by the DVR 106A. The storage medium 206 may comprise any type of non-volatile memory appropriate for storing video signals or other content recorded by the DVR 106A. Exemplary storage mediums 206 include hard drives (e.g., magnetic memory), flash memory, battery backed up memory and the like. In at least one embodiment, the storage medium 206 may be internally located within the DVR 106A. In other embodiments, the storage medium 206 may be located external with respect to the DVR 106A. The DVR 106A may also utilize a combination of internal and external storage mediums 206 for storage of video signals.

The control logic 208 is operable to control the operation of the DVR 106A. The control logic 208 may be a single processing device or a plurality of processing devices that cooperatively operate to control the operation of the DVR 106A. The control logic 208 may include various components or modules for processing and outputting audio/video content. Exemplary components or modules for processing audio/video content include a demodulator, a decoder, a decompressor, a conditional access module and a transcoder module.

The control logic 208 coordinates storage of the content 210 onto the storage medium 206. More particularly, in at least one embodiment, the control logic 206 operates responsive to recording timers configured on the DVR 106A to command the communication interface 202 to receive content from a specified channel and coordinates storage of the content onto the storage medium 206. The control logic 208 may also operate to store content received from the communication interface 202 responsive to user input requesting to record a presently viewed program (e.g., the user presses a record button).

In at least one embodiment, the control logic 208 is operable to generate an audio/video output 214 based on the content 210, e.g., pass through the signal for display by an associated presentation device 108A. The control logic 208 is also operable to retrieve stored video content from the storage medium 206 to generate an audio/video output 214 for display by the presentation device 108A. The presentation device 108A then presents the audio/video output 214 to the user. The control logic 208 may incorporate circuitry to output the audio/video streams in any format recognizable by the presentation device 108A, including composite video, component video, Digital Visual Interface (DVI), High-Definition Multimedia Interface (HDMI), 1394 and WiFi The control logic 208 may also incorporate circuitry to support multiple types of these or other audio/video formats. In at least one embodiment, as described above, the DVR 106A may be integrated with the presentation device 108A, and the control logic 208 may be operable to control the presentation of the audio/video output 214 by the presentation device 108A.

To coordinate the storage of the content 210, the control logic 208 is operable to receive user input requesting to record one or more television programs. The control logic 208 responsively sets recording timers associated with the television programs. Responsive to the recording timers, the control logic 208 coordinates the recording of the content 210 into a file of the storage medium 206.

In at least one embodiment, the control logic 208 processes a recording command 212 and coordinates reception of the program specified in the recording command 212 by the communication interface 202. Responsive to reception of the program, the control logic 208 coordinates storage of the program onto the storage medium 206. For example, as described above, the user 116A (see FIG. 1) may provide input to the server 112 to "follow" a particular profile maintained by the server 112. Accordingly, the server 112 transmits one or more recording commands 212 to the DVR 106A and the control logic 208 coordinates the recording of the program(s) specified by the recording command 212.

In at least one embodiment, the control logic 208 may prompt the user 116A to confirm whether to execute a particular recording command. For example, the control logic 208 may periodically output a selection menu generated based on various recording commands 212 received from the server 112 and may prompt the user 116A to confirm which of the recording commands 212 to execute and record the content specified therein. Thus, a recording command 212 is executed by the control logic 208 if the user 116A associated therewith confirms execution of the recording command.

As described above, a DVR 106A may receive data allowing a user to select a particular profile to follow. Thus, the communication interface 202 may receive profile information from the server identifying various profiles for selection. The control logic 208 processes the profile information to output one or more menu screens, including the profile information, allowing the user 116A to select one or more profiles. The control logic 208 initiates transmission of the user selection information to the server 112 via the communication interface 202. Thus, the communication interface 202 may subsequently receive recording commands 212, associated with the selected profile, from the server 112.

In at least one embodiment, the control logic 208 may monitor a user's 116A viewing characteristics and automatically select one of the profiles for the user 116A to follow. For example, if the user 116A views the same programs as a user associated with a particular profile or a substantial number of the same programs, then the control logic 208 may select one of the profiles to "follow" automatically and subsequently record programming associated with the profile. Thus, the DVR 106A records programming that the user 116A may like but may not have previously set a recording timer for the programming. For example, the user 116A may not have yet have been aware of the programming (e.g., new shows) or may not have been aware of particular broadcasts of the programming specified by the recording commands 212.

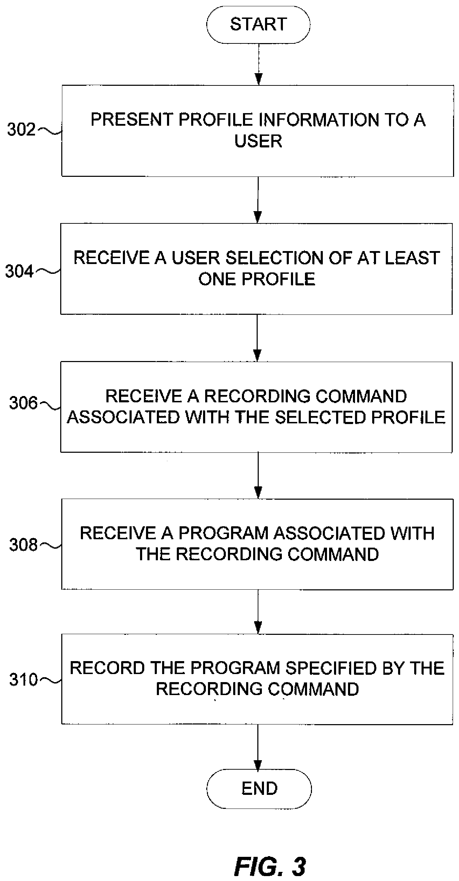

FIG. 3 illustrates an embodiment of a process for recording television programming. More particularly, the process of FIG. 3 is directed at sharing recording commands between multiple television receivers. The process of FIG. 3 may include other operations not illustrated for the sake of brevity.

The process includes presenting profile information to a user, the profile information including a plurality of profiles available for selection (operation 302). For example, a server may transmit profile information to a television receiver. The television receiver may then output the profile information to an associated presentation device in an appropriate user interface. More particularly, the television receiver may output a selection menu that presents the recording command for selection by a user.

The process further includes receiving a user selection of at least one of the profiles (operation 304). For example, the television receiver may receive input from a remote control selecting one of the profiles and may responsively transmit the user selection to a server for further processing.

The process further includes receiving at least one recording command, at a television receiver, from the server, the recording command associated with a user selected profile (operation 306). The process further includes receiving a program, specified by the recording command, at the television receiver, responsive to the recording command (operation 308) and coordinating storage of the program onto a storage medium associated with the television receiver, responsive to the recording command (operation 310). A user may subsequently select the recorded program for viewing from an appropriate menu output by the television receiver.

It will be appreciated that variations in, and modifications of, the embodiments as described and illustrated may be made within the scope of the accompanying claims.

## Claims

1. A method for recording television programming, the method comprising:
presenting (302) profile information to a user, the profile information including a plurality of profiles available for selection;
receiving (304) a user selection, of at least one of the profiles, at a server (112);
receiving (306) at least one recording command, at a digital video recorder (106A, 106B, 106C), from the server, the recording command associated with a user selected profile;
receiving (308) a program, specified by the recording command, at the digital video recorder, responsive to the recording command; and
coordinating storage of the program onto a storage medium (206) associated with the digital video recorder, responsive to the recording command;
**characterised in that**
the profiles available for selection are associated with other users such that a user can follow a specific user; **in that**
each specific user, who may or may not be identified, has authorised the server (112) to allow unfettered access to its profile to make the profile available to be followed; **in that**
the available profiles for selection are listed at the server (112); **in that**
the user selection specifies a plurality of profiles and **in that** receiving the recording command further comprises:
receiving, at the digital video recorder (106A, 106B, 106C), a first recording command, associated with a first selected profile;
receiving, at the digital video recorder (106A, 106B, 106C), a second recording command, associated with a second selected profile;
identifying, at the digital video recorder, a recording conflict between the first recording command and the second recording command; and
determining whether the first recording command has priority over the second recording command.

2. A method as claimed in Claim 1, further comprising:
receiving user input, at the digital video recorder (106A, 106B, 106C), specifying a priority of the first recording command.

3. A method as claimed in Claim 1, wherein presenting the profile information to a user further comprises:
transmitting the profile information from the server (112) to the digital video recorder (106A, 106B, 106C); and
outputting the profile information from the digital video recorder to an associated presentation device (108A, 108B, 108C).

4. A method as claimed in any preceding claim, wherein the plurality of profiles comprise a plurality of profile types, each associated with a particular theme of programming.

5. A method as claimed in any preceding claim, further comprising:
outputting a selection menu, from the digital video recorder (106A, 106B, 106C) to an associated presentation device (108A, 108B, 108C), the selection menu presenting information associated with the recording command; and
receiving user input, at the digital video recorder, confirming execution of the recording command;
wherein coordinating storage of the program onto the storage medium (206) is performed if the user input confirms execution of the recording command.

6. A digital video recorder (106A, 106B, 106C) comprising:
a communication interface (202) operable to receive television programming from a television distribution system (104) and to receive profile information, associated with a plurality of profiles, from a server (112);
a storage medium (206); and
control logic (208) operable to select at least one of the profiles;
the communication interface (202) operable to transmit information specifying the selected profile to the server and receive at least one recording command associated with the selected profile from the server;
the control logic operable to command the communication interface to receive a program specified by the recording command and coordinate storage of the program onto the storage medium (206);
**characterised in that**
the profiles available for selection are associated with other users such that a user can follow a specific user; **in that**
each specific user, who may or may not be identified, has authorised the server (112) to allow unfettered access to its profile to make the profile available to be followed; **in that**
the available profiles for selection are listed at the server (112); **in that**
the control logic is operable to:
receive, at the digital video recorder (106A, 106B, 106C), a first recording command, associated with a first selected profile;
receive, at the digital video recorder, a second recording command, associated with a second selected profile;
identify, at the digital video recorder, a recording conflict between the first recording command and the second recording command; and
determine whether the first recording command has priority over the second recording command.

7. A digital video recorder as claimed in Claim 6, wherein the control logic (208) is operable to output the profile information to a presentation device (108A, 108B, 108C) and wherein the digital video recorder (106A, 106B, 106C) further comprises an input interface (204) operable to receive user input selecting at least one of the profiles, the communication interface (202) operable to transmit information specifying the selected profile to the server and to receive at least one recording command, associated with the selected profile, from the server (112).

8. A digital video recorder as claimed in Claim 6 or Claim 7, wherein the plurality of profiles comprise a plurality[ of profile types, each associated with a particular theme of programming.

9. A digital video recorder as claimed in any of Claims 6 to 8, wherein the communication interface (202) receives the recording command over a data communication network separate from the television distribution system.

10. A digital video recorder as claimed in any of Claims 6 to 9, wherein:
the control logic (208) is operable to output a selection menu, to an associated presentation device (108A, 108B, 108C), the selection menu presenting information associated with the recording command;
the input interface (204) operable to receive user input confirming execution of the recording command; and
the control logic (208) operable to coordinate storage of the program if the user input confirms execution of the recording command.

11. A digital video recorder as claimed in any of Claims 6 to 10, wherein the control logic (208) is operable to process viewing characteristics of the user and automatically select one of the profiles based on the viewing characteristics and transmit the automatically selected profile to the server.

## Patentansprüche

1. Verfahren zum Aufnehmen von Fernsehprogrammen, wobei das Verfahren Folgendes beinhaltet:
Präsentieren (302) von Profilinformationen gegenüber einem Benutzer, wobei die Profilinformationen eine Vielfalt von zur Auswahl verfügbaren Profilen umfassen;
Empfangen (304) einer Benutzerauswahl, von mindestens einem der Profile, an einem Server (112);
Empfangen (306) von mindestens einem Aufnahmebefehl, an einem digitalen Videoaufnahmegerät (106A, 106B, 106C), am Server, wobei der Aufnahmebefehl mit einem benutzergewählten Profil assozüert ist;
Empfangen (308) eines Programms, spezifiziert durch den Aufnahmebefehl, am digitalen Videoaufnahmegerät, als Reaktion auf den Aufnahmebefehl; und
Koordinieren der Speicherung des Programms auf einem Speichermedium (206), das mit dem digitalen Videoaufnahmegerät assozüert ist, als Reaktion auf den Aufnahmebefehl;
**dadurch gekennzeichnet, dass**
die zur Auswahl verfügbaren Programme mit anderen Benutzern assozüert sind, sodass ein Benutzer einen spezifischen Benutzer verfolgen kann; dass
jeder spezifische Benutzer, der identifiziert sein kann oder nicht, den Server (112) autorisiert hat, uneingeschränkten Zugang auf dessen Profil zu erlauben, um das Profil zum Verfolgen verfügbar zu machen; dass
die zur Auswahl verfügbaren Profile am Server (112) aufgelistet sind; dass
die Benutzerauswahl eine Vielzahl von Profilen spezifiziert und dass das Empfangen des Aufnahmebefehls ferner Folgendes beinhaltet:
Empfangen, am digitalen Videoaufnahmegerät (106A, 106B, 106C), eines ersten Aufnahmebefehls, der mit einem ersten ausgewählten Profil assoziiert ist;
Empfangen, am digitalen Videoaufnahmegerät (106A, 106B, 106C), eines zweiten Aufnahmebefehls, der mit einem zweiten ausgewählten Profil assoziiert ist;
Identifizieren, am digitalen Videoaufnahmegerät, eines Aufnahmekonflikts zwischen dem ersten Aufnahmebefehl und dem zweiten Aufnahmebefehl; und
Bestimmen, ob der erste Aufnahmebefehl Priorität gegenüber dem zweiten Aufnahmebefehl aufweist.

2. Verfahren gemäß Anspruch 1, das ferner Folgendes beinhaltet:
Empfangen einer Benutzereingabe, am digitalen Videoaufnahmegerät (106A, 106B, 106C), die eine Priorität des ersten Aufnahmebefehls spezifiziert.

3. Verfahren gemäß Anspruch 1, wobei das Präsentieren der Profilinformationen gegenüber einem Benutzer ferner Folgendes beinhaltet:
Übertragen der Profilinformationen vom Server (112) an das digitale Videoaufnahmegerät (106A, 106B, 106C); und
Ausgeben der Profilinformationen vom digitalen Videoaufiiahmegerät an ein assoziierte Präsentationsgerät (108A, 108B, 108C).

4. Verfahren gemäß einem vorhergehenden Anspruch, wobei die Vielzahl von Profilen eine Vielzahl von Profiltypen beinhaltet, die jeweils mit einem bestimmten Programmthema assozüert sind.

5. Verfahren gemäß einem vorhergehenden Anspruch, das ferner Folgendes beinhaltet:
Ausgeben eines Auswahlmenüs, vom digitalen Videoaufiiahmegerät (106A, 106B, 106C) an ein assoziierte Präsentationsgerät (108A, 108B, 108C), wobei das Auswahlmenü mit dem Aufiiahmebefehl assoziierte Informationen präsentiert; und
Empfangen einer Benutzereingabe, am digitalen Videoaufnahmegerät, welche die Ausführung des Aufnahmebefehls bestätigt;
wobei das Koordinieren der Speicherung des Programms auf dem Speichermedium (206) durchgeführt wird, falls die Benutzereingabe die Ausführung des Aufnahmebefehls bestätigt.

6. Digitales Videoaufnahmegerät (106A, 106B, 106C), das Folgendes beinhaltet:
eine Kommunikationsschnittstelle (202), die betriebsfähig ist, um Fernsehprogramme von einem Fernsehverteilungssystem (104) zu empfangen und um Profilinformationen, die mit einer Vielzahl von Profilen assozüert sind, von einem Server (112) zu empfangen;
ein Speichermedium (206); und
Steuerlogik (208), die betriebsfähig ist, um mindestens eines der Profile auszuwählen;
wobei die Kommunikationsschnittstelle (202) betriebsfähig ist, um Informationen, die das ausgewählte Profil spezifizieren, an den Server zu übertragen und mindestens einen mit dem ausgewählten Profil assoziierten Aufnahmebefehl vom Server zu empfangen;
wobei die Steuerlogik betriebsfähig ist, um der Kommunikationsschnittstelle zu befehlen, ein durch den Aufnahmebefehl spezifiziertes Programm zu empfangen und die Speicherung des Programms auf dem Speichermedium (206) zu koordinieren;
**dadurch gekennzeichnet, dass**
die zur Auswahl verfügbaren Programme mit anderen Benutzern assoziiert sind, sodass ein Benutzer einen spezifischen Benutzer verfolgen kann; dass
jeder spezifische Benutzer, der identifiziert sein kann oder nicht, den Server (112) autorisiert hat, uneingeschränkten Zugang auf dessen Profil zu erlauben, um das Profil zum Verfolgen verfügbar zu machen; dass
die zur Auswahl verfügbaren Profile am Server (112) aufgelistet sind; dass
die Steuerlogik betriebsfähig ist, um:
am digitalen Videoaufnahmegerät (106A, 106B, 106C) einen ersten Aufuahmebefehl, der mit einem ersten ausgewählten Profil assozüert ist, zu empfangen;
am digitalen Videoaufnahmegerät einen zweiten Aufuahmebefehl, der mit einem zweiten ausgewählten Profil assozüert ist, zu empfangen;
am digitalen Videoaufnahmegerät einen Aufnahmekonflikt zwischen dem ersten Aufuahmebefehl und dem zweiten Aufuahmebefehl zu identifizieren; und
zu bestimmen, ob der erste Aufuahmebefehl Priorität gegenüber dem zweiten Aufuahmebefehl aufweist.

7. Digitales Videoaufnahmegerät gemäß Anspruch 6, wobei die Steuerlogik (208) betriebsfähig ist, um die Profilinformationen an ein Präsentationsgerät (108A, 108B, 108C) auszugeben, und wobei das digitale Videoaufnahmegerät (106A, 106B, 106C) ferner eine Eingabeschnittstelle (204) beinhaltet, die betriebsfähig ist, um eine Benutzereingabe zu empfangen, welche mindestens eines der Profile auswählt, wobei die Kommunikationsschnittstelle (202) betriebsfähig ist, um Informationen, die das ausgewählte Profil spezifizieren, an den Server zu übertragen und mindestens einen mit dem ausgewählten Profil assoziierten Aufnahmeprofil vom Server (112) zu empfangen.

8. Digitales Videoaufnahmegerät gemäß Anspruch 6 oder Anspruch 7, wobei die Vielzahl von Profilen eine Vielzahl von Profiltypen beinhaltet, die jeweils mit einem bestimmten Programmthema assozüert sind.

9. Digitales Videoaufnahmegerät gemäß einem der Ansprüche 6 bis 8, wobei die Kommunikationsschnittstelle (202) den Aufnahmebefehl über ein vom Fernsehverteilungssystem getrenntes Datenkommunikationsnetz empfängt.

10. Digitales Videoaufnahmegerät gemäß einem der Ansprüche 6 bis 9, wobei:
die Steuerlogik (208) betriebsfähig ist, um ein Auswahlmenü an ein assoziierte Präsentationsgerät (108A, 108B, 108C) auszugeben, wobei das Auswahlmenü mit dem Aufuahmebefehl assoziierte Informationen präsentiert;
die Eingabeschnittstelle (204) betriebsfähig ist, um eine Benutzereingabe zu empfangen, welche die Ausführung des Aufnahmebefehls bestätigt; und
die Steuerlogik (208) betriebsfähig ist, um die Speicherung des Programms zu koordinieren, falls die Benutzereingabe die Ausführung des Aufuahmebefehls bestätigt.

11. Digitales Videoaufnahmegerät gemäß einem der Ansprüche 6 bis 10, wobei die Steuerlogik (208) betriebsfähig ist, um Betrachtungsmerkmale des Benutzers zu verarbeiten und automatisch eines der Profile basierend auf den Betrachtungsmerkmalen auszuwählen und automatisch das ausgewählte Profil an den Server zu übertragen.

## Revendications

1. Méthode d'enregistrement de programmation de télévision, la méthode comprenant :
la présentation (302) d'informations sur le profil à un utilisateur, les informations sur le profil comprenant une pluralité de profils disponibles pour la sélection ;
la réception (304) à un serveur (112) d'une sélection par l'utilisateur d'au moins un des profils ;
la réception (306) par le serveur d'au moins une commande d'enregistrement à un magnétoscope numérique (106A, 106B, 106C), la commande d'enregistrement étant associée avec un profil sélectionné par l'utilisateur ;
la réception (308) d'une émission, spécifiée par la commande d'enregistrement, au magnétoscope numérique, en réponse à la commande d'enregistrement ; et
la coordination de l'enregistrement de l'émission sur un support de stockage (206) associé avec le magnétoscope numérique et répondant à la commande d'enregistrement ;
**caractérisée en ce que**
les profils disponibles pour la sélection sont associés avec d'autres utilisateurs, de sorte qu'un utilisateur puisse suivre un utilisateur spécifique ; **en ce que**
chaque utilisateur spécifique, pouvant être identifié ou non, a autorisé le serveur (112) à donner libre accès à son profil afin que le profil soit disponible pour être suivi ; **en ce que**
les profils disponibles pour la sélection sont répertoriés au serveur (112) ; **en ce que**
la sélection de l'utilisateur spécifie une pluralité de profils et **en ce que** la réception de la commande d'enregistrement comprend en outre :
la réception, au magnétoscope numérique (106A, 106B, 106C), d'une première commande d'enregistrement associée avec un premier profil sélectionné ;
la réception, au magnétoscope numérique (106A, 106B, 106C), d'une deuxième commande d'enregistrement associée avec un deuxième profil sélectionné ;
l'identification, au magnétoscope numérique, d'un conflit d'enregistrement entre la première commande d'enregistrement et la deuxième commande d' enregistrement ; et
la détermination de la priorité éventuelle de la première commande d'enregistrement sur la deuxième commande d'enregistrement.

2. Méthode selon la revendication 1, comprenant également :
la réception de l'entrée utilisateur au magnétoscope numérique (106A, 106B, 106C), spécifiant une priorité de la première commande d'enregistrement.

3. Méthode selon la revendication 1, la présentation des informations sur le profil à un utilisateur comprenant en outre :
la transmission des informations sur le profil du serveur (112) au magnétoscope numérique (106A, 106B, 106C) ; et
la sortie des informations sur le profil du magnétoscope numérique à un dispositif de présentation connexe (108A, 108B, 108C).

4. Méthode selon une quelconque des revendications précédentes, la pluralité de profils comprenant une pluralité de types de profils, chacun étant associé avec un certain thème de programmation.

5. Méthode selon une quelconque des revendications précédentes, comprenant en outre :
la sortie d'un menu de sélection, du magnétoscope numérique (106A, 106B, 106C) à un dispositif de présentation connexe (108A, 108B, 108C), le menu de sélection présentant des informations associées avec la commande d'enregistrement ; et
la réception de l'entrée utilisateur, au magnétoscope numérique, confirmant l'exécution de la commande d' enregistrement ;
la coordination du stockage de l'émission sur le support de stockage (206) étant effectuée si l'entrée utilisateur confirme l'exécution de la commande d'enregistrement

6. Magnétoscope numérique (106A, 106B, 106C) comprenant :
une interface de communication (202) utilisable pour recevoir la programmation de télévision d'un système de distribution de télévision (104) et recevoir des informations sur le profil, associées avec une pluralité de profils, d'un serveur (112) ;
un support de stockage (206) ; et
une logique de commande (208) utilisable pour sélectionner au moins un des profils ;
l'interface de communication (202) étant utilisable pour transmettre des informations spécifiant le profil sélectionné au serveur et recevoir au moins du serveur une commande d'enregistrement associée avec le profil sélectionné ;
la logique de commande étant utilisable pour commander à l'interface de communication de recevoir une émission spécifiée par la commande d'enregistrement, et coordonner le stockage de l'émission sur le support de stockage (206) ;
**caractérisé en ce que**
les profils disponibles pour la sélection sont associés avec d'autres utilisateurs de sorte qu'un utilisateur puisse suivre un utilisateur spécifique ; **en ce que**
chaque utilisateur spécifique, pouvant être identifié ou non, a autorisé le serveur (112) à donner libre accès à son profil afin que le profil soit disponible pour être suivi ; **en ce que**
les profils disponibles pour la sélection sont répertoriés au serveur (112) ; **en ce que**
la logique de commande est utilisable pour :
recevoir, au magnétoscope numérique (106A, 106B, 106C), une première commande d'enregistrement associée avec un premier profil sélectionné ;
recevoir, au magnétoscope numérique, une deuxième commande d'enregistrement associée avec un deuxième profil sélectionné ;
identifier, au magnétoscope numérique, un conflit d'enregistrement entre la première commande d'enregistrement et la deuxième commande d'enregistrement ; et
établir si la première commande d'enregistrement a priorité sur la deuxième commande d'enregistrement.

7. Magnétoscope numérique selon la revendication 6, la logique de commande (208) étant utilisable pour sortir les informations sur le profil à un dispositif de présentation (108A, 108B, 108C), et le magnétoscope numérique (106A, 106B, 106C) comprenant en outre une interface d'entrée (204) utilisable pour recevoir une entrée utilisateur sélectionnant au moins un des profils, l'interface de communication (202) étant utilisable pour transmettre des informations spécifiant le profil sélectionné au serveur, et recevoir du serveur (112) au moins une commande d'enregistrement associée avec le profil sélectionné.

8. Magnétoscope numérique selon la revendication 6 ou la revendication 7, la pluralité de profils comprenant une pluralité de types de profils, chacun étant associé avec un certain thème de programmation.

9. Magnétoscope numérique selon une quelconque des revendications 6 à 8, l'interface de communication (202) recevant la commande d'enregistrement sur un réseau de communication de données distinct du système de distribution de télévision.

10. Magnétoscope numérique selon une quelconque des revendications 6 à 9, dans lequel :
la logique de commande (208) est utilisable pour sortir un menu de sélection à un dispositif de présentation (108A, 108B, 108C) connexe, le menu de sélection présentant des informations associées avec la commande d'enregistrement ;
l'interface utilisateur (204) étant utilisable pour recevoir une entrée utilisateur confirmant l'exécution de la commande d'enregistrement ; et
la logique de commande (208) étant utilisable pour coordonner le stockage de l'émission si l'entrée utilisateur confirme l'exécution de la commande d'enregistrement.

11. Magnétoscope numérique selon une quelconque des revendications 6 à 10, la logique de commande (208) étant utilisable pour le traitement de caractéristiques de visualisation de l'utilisateur, sélectionner automatiquement un des profils en fonction des caractéristiques de visualisation, et transmettre le profil sélectionné automatiquement au serveur.
